# FASCICULE DE BREVET EUROPEEN

(11) **EP 1 328 861 B1**
(45) Date de publication et mention de la délivrance du brevet: **05.03.2014**
(21) Numéro de dépôt: 01969882.8
(22) Date de dépôt: 13.09.2001
(51) Int. Cl.: G06F 3/14, H04L 12/18, G06F 17/30, G06F 9/44

(54) **PROCEDE DE COMMANDE A DISTANCE DE L'ECRAN D'AFFICHAGE D'UN ORDINATEUR**
VERFAHREN ZUR FERNSTEUERUNG DES ANZEIGEBILDSCHIRMS EINES COMPUTERS
REMOTE CONTROL METHOD FOR A COMPUTER DISPLAY SCREEN

(30) Priorité: 14.09.2000 FR 0011730
(43) Date de publication de la demande: 23.07.2003
(73) Titulaire: Kadrige, 75002 Paris (FR)
(72) Inventeur: CADOU, Olivier, F-75007 Paris (FR); MONDOULET, Bernard, F-78800 Houilles (FR); HANOTIN, Philippe, F-78150 Rocquencourt (FR); ROUPIE, Patrick, F-75011 Paris (FR)
(74) Mandataire: Novagraaf Technologies
(86) Numéro de dépôt international: PCT/FR2001/002850
(87) Numéro de publication internationale: WO 2002/023324

(56) Documents cités:
- EP-A- 0 820 028
- WO-A-99/14926
- US-A- 6 009 429

## Description

La présente invention concerne un procédé de commande à distance de l'écran d'affichage d'un ordinateur.

Elle s'applique notamment, mais non exclusivement à l'enseignement à distance et aux visites commerciales, à l'aide d'un réseau de transmission de données numériques.

A l'heure actuelle, il n'existe pas de moyens simples permettant de faire une présentation interactive à distance, par exemple commerciale ou dans un but de formation.

Une personne disposant d'un ordinateur connecté à un réseau de transmission tel que le réseau Internet, peut avoir accès à des documents, mais il n'est pas possible pour un formateur ou un représentant commercial de savoir quels documents cette personne a consulté de cette manière, ni quel document elle consulte sur son ordinateur à un instant donné.

Il existe par ailleurs des logiciels permettant à l'opérateur d'un ordinateur de piloter à distance un autre ordinateur. Toutefois, cette solution implique que chaque ordinateur exécute à cet effet un même logiciel spécifique ou des logiciels compatibles. Cette solution pose de nombreux problèmes, notamment lorsque les ordinateurs à piloter ne fonctionnent pas avec le même système d'exploitation ou plus généralement, ne possèdent pas une même configuration matérielle et logicielle.

En outre, elle nécessite l'installation sur chaque ordinateur d'un logiciel adéquat et donc une intervention de chaque utilisateur qui peut parfois nécessiter des compétences techniques de spécialistes. Cette solution présente également l'inconvénient de placer l'ordinateur piloté entièrement sous le contrôle de l'opérateur distant, ce qui dans certains cas, peut poser des problèmes de confidentialité vis-à-vis des informations stockées dans le disque dur de l'ordinateur piloté à distance et de sécurité concernant le fonctionnement de cet ordinateur si l'opérateur distant exécute certaines opérations.

La présente invention a pour but de permettre à un opérateur disposant d'un ordinateur connecté à un réseau de transmission de données numériques de piloter à distance l'écran d'affichage d'un ou plusieurs ordinateurs connectés à ce même réseau.

La présente invention a pour but de supprimer ces inconvénients. A cet effet, elle propose un procédé pour la commande à distance de l'écran d'affichage d'un premier ordinateur, par un second ordinateur, ces deux ordinateurs étant interconnectés par un réseau de transmission de données numériques.

Selon l'invention, ce procédé est caractérisé en ce qu'il comprend :
- l'exécution par le premier ordinateur d'une procédure contenant une commande périodique de lecture d'une adresse de document, et d'affichage du document accessible par le réseau à l'aide de l'adresse lue, et
- la commande de la modification par le second ordinateur de l'adresse lue par le premier ordinateur, l'exécution périodique de la commande de lecture et d'affichage par le premier ordinateur entraînant l'affichage par le premier ordinateur d'un nouveau document dont l'adresse a été modifiée par le second ordinateur.

De cette manière, l'opérateur du second ordinateur peut agir à sa guise sur le document affiché par le premier ordinateur sans qu'il soit nécessaire d'installer préalablement des logiciels spécifiques sur l'un et/ou l'autre ordinateur.

Si le réseau de transmission utilisé est un réseau basé sur le protocole TCP/IP comme Internet, le procédé selon l'invention peut être réalisé à l'aide de moyens tout à fait standards, indépendants de la configuration matérielle et logicielle des ordinateurs mis en oeuvre, et en particulier sans impliquer l'installation sur l'un ou l'autre des ordinateurs de logiciels spécifiques.

La procédure exécutée par le premier ordinateur se présente sous la forme d'un script dans un fichier de type balisé, par exemple de type HTML, le contenu de ce fichier étant tel que son affichage au moyen d'un logiciel standard, adapté entraîne uniquement l'exécution du script par le logiciel, cette exécution déclenchant l'affichage dans une fenêtre de l'écran d'affichage du premier ordinateur, du document repéré par son adresse sur le réseau dans le script.

Document WO99/14926 décrit un procédé pour la commande à distance de l'écran d'affichage d'un premier ordinateur, par un second ordinateur. Le procédé est pareil au procédé de la revendication 1 mais le transfert de l'adresse du document à afficher se passe sous la forme d'envoi de messages à travers d'un serveur et ce transfert est réalisé avec des procédures écrite en "Java".

La procédure exécutée par le premier ordinateur contient une requête d'accès à un champ adresse contenu dans une base de données accessible par le réseau de transmission, ce champ contenant l'adresse du document à afficher, le second ordinateur modifiant l'adresse contenue dans ce champ pour modifier le document affiché sur le premier ordinateur.

Selon une particularité de l'invention, la base de données contient un second champ dans lequel est mémorisé un indicateur de modification du contenu du premier champ, la procédure exécutée par le premier ordinateur effectuant une requête périodique d'accès à la base de données pour lire la valeur de l'indicateur contenu dans ce second champ, et pour déclencher l'affichage du document dont l'adresse est contenue dans le premier champ, uniquement si la valeur de l'indicateur indique que le document affiché sur le premier ordinateur a été modifié.

Selon une autre particularité de l'invention, le second ordinateur exécute également une procédure sous la forme d'un script contenu dans un fichier de type HTML, cette procédure déclenchant l'affichage dans une première fenêtre du document dont l'adresse est contenue dans le premier champ dans la base de données, et dans une seconde fenêtre, d'un ensemble de commandes que l'opérateur peut actionner pour afficher un nouveau document, l'actionnement d'une de ces commandes déclenchant la mise à jour du premier champ avec une adresse de document correspondant à la commande actionnée, et la mise à jour de l'indicateur contenu dans le second champ pour indiquer que le document à afficher a été modifié.

Les opérateurs des deux ordinateurs peuvent être par ailleurs en conversation téléphonique, le second opérateur commandant en temps réel l'affichage de documents sur le premier ordinateur et commentant au fur et à mesure ceux-ci (qui apparaissent sur les deux ordinateurs) par téléphone ou par tout autre moyen de transmission, y compris le réseau de transmission utilisé pour accéder aux documents. Le procédé selon l'invention est ainsi parfaitement adapté au travail de visiteur médical qui peut sans se déplacer contacter des médecins, leur demander de charger le script correspondant qui lui permet d'afficher tous les documents souhaités au moment souhaité, et commenter par téléphone les documents ainsi affichés.

Ce procédé est également adapté à la formation à distance, mettant en oeuvre une pluralité d'ordinateurs mis à la disposition d'élèves et d'un ordinateur mis à la disposition du professeur. En effet, le procédé selon l'invention autorise l'accès simultané en lecture d'une pluralité d'ordinateurs à la base de données pour obtenir l'adresse du document à afficher.

Un mode de mise en oeuvre du procédé selon l'invention sera décrit ci-après, à titre d'exemple non limitatif, avec référence aux dessins annexés dans lesquels
La figure 1 représente schématiquement deux ordinateurs et un moyen de transmission entre ceux-ci ;
Les figures 2a et 2b montrent les écrans qui sont affichés respectivement par le premier et le second ordinateur ;
Les figures 3a et 3b représentent sous la forme d'organigrammes les procédures qui sont exécutées conformément au procédé selon l'invention, respectivement par le premier et le second ordinateur.

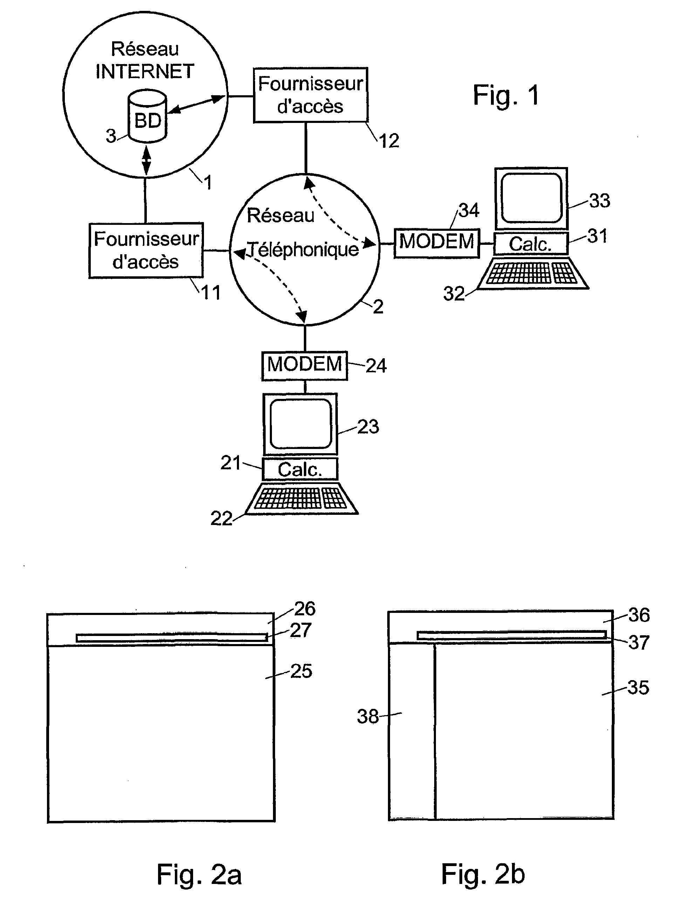

Sur la figure 1, le procédé selon l'invention, met en oeuvre au moins un premier ordinateur 21 connecté d'une manière classique à un écran de visualisation 23 et des organes de commande, tels qu'un clavier 22 et une souris, ainsi qu'un second ordinateur 31 également équipé d'un écran 33 et d'organes de commande 32. Ces deux ordinateurs peuvent communiquer par l'intermédiaire d'un réseau de transmission de données 1 qui peut être par exemple un réseau de type Intranet ou Internet. Dans le cas du réseau Internet, il peut être nécessaire de passer par un réseau téléphonique 2 auquel le premier et/ou le second ordinateur sont connectés au moyen d'un modem respectif 24, 34, le modem et le réseau téléphonique permettant d'accéder à un fournisseur d'accès 11, 12, lequel donne accès au réseau Internet 1.

Selon l'invention, le réseau 1 permet aux ordinateurs 21 et 31 d'accéder à une base de données 3 comprenant un champ adresse de document contenant l'adresse d'un document à afficher et un champ indicateur de mise à jour dont la valeur indique si le document dont l'adresse figure dans le champ adresse a été affiché par le premier ordinateur 21.

Pour plus de clarté, le premier ordinateur 21 sera appelé dans la description qui suit "ordinateur élève", et le second ordinateur 31 "ordinateur maître".

Un logiciel de navigation de type Internet est activé sur les deux ordinateurs 21 et 31, ce logiciel n'étant pas nécessairement identique sur les deux ordinateurs.

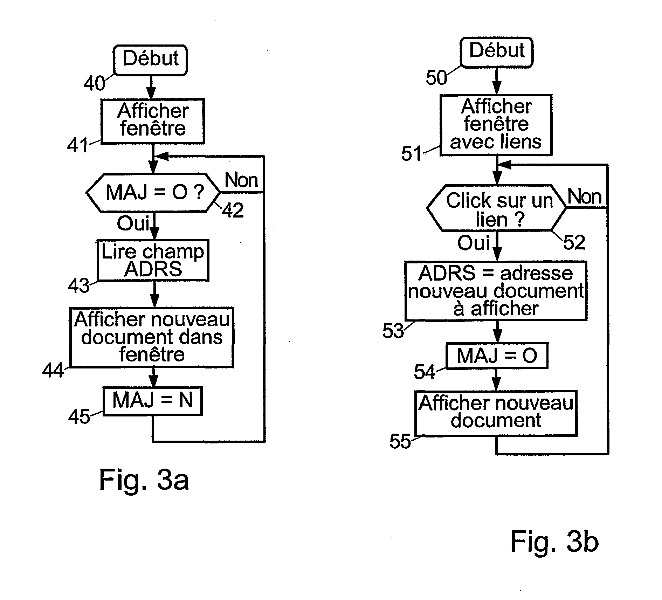

Les figures 3a et 3b représentent l'enchaîmement des différentes étapes des procédures 40 et 50 qui sont exécutées respectivement sur les ordinateurs élève 21 et maître 31.
A l'étape 41, on ouvre sur l'ordinateur élève à l'aide du logiciel de navigation un fichier balisé ne contenant aucune information à afficher, mais uniquement une procédure sous la forme d'un script, qui est exécutée par le logiciel de consultation. A l'issue de cette étape, la fenêtre représentée sur la figure 2a est affichée à l'écran 23 de l'ordinateur élève 21. Cette fenêtre comprend d'une manière classique une zone principale 25 d'affichage des documents consultés, surmontée d'un bandeau supérieur 26 permettant d'accéder aux différentes commandes du logiciel de consultation, ce bandeau comportant un champ 27 d'introduction et/ou d'affichage de l'adresse du document affiché dans la zone principale 25.

Parallèlement, à l'étape 51 de la procédure 50, on ouvre sur l'ordinateur maître 31 à l'aide du logiciel de navigation, un fichier balisé contenant des commandes d'affichage d'une zone principale vide et d'une zone contenant une liste d'adresses ou liens vers d'autres documents accessibles par le réseau 1 à afficher sur l'ordinateur élève 21, ce fichier contient également une procédure sous la forme d'un script, qui est exécutée par le logiciel de consultation. A l'issue de cette étape, la fenêtre représentée sur la figure 2b est affichée à l'écran 33 de l'ordinateur maître 31. Cette fenêtre comprend également une zone principale 35 d'affichage du document affiché dans la zone 25 de l'ordinateur 21, surmontée d'un bandeau supérieur 36 permettant d'accéder aux différentes commandes du logiciel de consultation, ce bandeau comportant un champ 37 d'introduction et/ou d'affichage de l'adresse du document affiché dans la zone principale 35. La zone 35 est divisée en deux parties, l'une de ces deux parties 38 contenant la liste des liens vers les documents pouvant ainsi être affichés.

La procédure 50 exécutée par le logiciel de consultation activé sur l'ordinateur maître 31 détecte si l'opérateur a sélectionné et activé l'un de ces liens vers des documents (étape 52), et si tel est le cas, elle met à jour dans la base de données 3 le champ adresse avec l'adresse du document correspondant au lien activé (étape 53), ainsi que le champ indicateur de mise à jour, pour indiquer qu'un nouveau document doit être affiché (étape 54). Ensuite, la procédure 50 commande l'affichage du document ainsi sélectionné dans la partie réservée à cet effet dans la zone principale 35 de l'écran 33. A l'issue de cette étape, la procédure 50 se met en attente d'une nouvelle sélection d'un lien dans la liste de liens affichée dans la zone 3 8.

La procédure 40 exécutée par le logiciel de consultation activé sur l'ordinateur élève 21 effectue périodiquement des requêtes de lecture de la base de données 3, pour surveiller la valeur de l'indicateur de mise à jour (étape 42), et si cette valeur indique qu'un nouveau document doit être affiché, elle lit (étape 43) la nouvelle adresse figurant dans le champ adresse et commande l'affichage du document dont l'adresse sur le réseau 1 est indiquée par l'adresse lue dans la base de données 3 (étape 44). Pour ne pas réafficher ce document au cycle suivant, elle met à jour l'indicateur de mise à jour dans la base de données 3, pour indiquer que le document dont l'adresse figure dans le champ adresse est affiché (étape 45). A l'issue de cette étape, la procédure 40 se met en attente d'une modification de la valeur de l'indicateur de mise à jour dans la base de données.

De cette manière, l'opérateur de l'ordinateur maître peut commander en temps réel l'affichage d'un document sur l'écran de l'ordinateur élève, sans avoir de possibilités d'accès aux autres fonctionnalités de l'ordinateur élève. La sécurité et la confidentialité sont donc respectées.

Bien entendu, plusieurs ordinateurs élèves peuvent ainsi être commandés par l'intermédiaire d'un ordinateur maître, dans ce cas, il faut prévoir un champ indicateur de mise à jour par ordinateur élève à commander, et prévoir que la procédure 50 modifie la valeur de tous ces indicateurs lorsqu'il change l'adresse du document à afficher. Cette disposition permet à l'opérateur de l'ordinateur maître de commander individuellement chaque ordinateur élève.

Les procédures 40 et 50 sont de préférence écrites dans le langage Java Script ou PHP, qui est interprétable par tous les logiciels standards récents de consultation de documents, et ce quel que soit le type d'ordinateur ou de système d'exploitation utilisé.

D'une manière classique, les documents ainsi affichés sur les deux ordinateurs peuvent contenir du texte, des séquences sonores ou vidéo. Le procédé selon l'invention présente donc de nombreuses applications, telles que la présentation à distance de produits, la formation à distance, ou encore la téléconférence

Par ailleurs, le procédé qui vient d'être décrit peut être bidirectionnel. Dans ce cas, il faut prévoir deux champs adresse dans la base de données 3, associés respectivement à deux champs indicateur de mise à jour, les deux champs adresse contenant les adresses respectives des documents à afficher par l'un des ordinateurs sur l'autre ordinateur et réciproquement. Il faut également prévoir de fusionner en une seule les deux procédures 40 et 50, et diviser en trois parties les zones principales d'affichage 25, 35 sur les écrans des deux ordinateurs 21, 31, la première partie contenant une liste de liens vers des documents à afficher sur l'autre ordinateur, la seconde partie contenant le document sélectionné dans la liste de liens affichée dans la première partie, et la troisième partie contenant le document sélectionné sur l'autre ordinateur.

Il est à noter que les documents affichés par les deux ordinateurs peuvent être les mêmes, chaque ordinateur pouvant modifier l'adresse de ce document. Dans ce cas, une seule zone d'affichage est nécessaire, et également un seul champ adresse et indicateur de mise à jour en base de données.

## Revendications

1. Procédé pour la commande à distance de l'écran d'affichage (23) d'un premier ordinateur (21), par un second ordinateur (31), ces deux ordinateurs étant interconnectés par un réseau de transmission (1) de données numériques permettant aux premier (21) et deuxième (31) ordinateurs d'accéder à une base de données (3) comprenant un champ adresse contenant l'adresse d'un document à afficher et un champ indicateur de mise à jour dont la valeur indique si le document dont l'adresse figure dans le champ adresse a été affiché par le premier ordinateur (21),
le procédé comprenant des étapes consistant à :
• ouvrir sur le premier ordinateur (21) à l'aide d'un logiciel de navigation de type Internet un fichier balisé contenant une première procédure (40) sous la forme d'un script ;
• exécuter par le premier ordinateur (21) ladite première procédure (40), l'exécution de la première procédure (40) comprenant des étapes consistant à :
○ exécuter une requête d'accès au champ adresse contenu dans la base de données ; et
○ afficher dans une fenêtre de l'écran d'affichage du premier ordinateur (21) ledit document repéré par son adresse ;
• ouvrir parallèlement sur le deuxième ordinateur (31) à l'aide d'un logiciel de navigation de type Internet un fichier balisé contenant une deuxième procédure (50) sous la forme d'un script,
• exécuter par le deuxième ordinateur (31) ladite deuxième procédure (50), l'exécution de la deuxième procédure (50) comprenant des étapes consistant à :
○ exécuter une requête d'accès audit champ adresse contenu dans la base de données ;
○ afficher dans une première fenêtre de l'écran d'affichage du deuxième ordinateur (31) ledit document repéré par son adresse ;
○ afficher dans une deuxième fenêtre de l'écran d'affichage du deuxième ordinateur (31) une liste de liens vers des documents pouvant être affichés et que l'opérateur du deuxième ordinateur (31) peut sélectionner ;
• sélectionner et activer par l'opérateur du deuxième ordinateur (31) un des liens de la liste,
• l'exécution de la deuxième procédure (50) par le logiciel de consultation du deuxième ordinateur (31) comprenant des étapes consistant à :
○ détecter si l'opérateur du deuxième ordinateur (31) a sélectionné et activé l'un des liens vers des documents (52) ; et si tel est le cas,
○ mettre à jour dans la base de données (3) le champ adresse avec l'adresse du document correspondant au lien activé (53),
○ mettre à jour le champ indicateur de mise à jour,
○ commander l'affichage du document ainsi sélectionné dans une partie réservée à cet effet de l'écran (33) du deuxième ordinateur (31) ;
• l'exécution de la première procédure (40) comprenant en outre des étapes consistant à :
○ effectuer périodiquement des requêtes de lecture de la base de données (3) pour surveiller la valeur de l'indicateur de mise à jour (42), et si cette valeur indique qu'un nouveau document doit être affiché,
○ lire (43) la nouvelle adresse figurant dans le champ adresse,
○ commander l'affichage (44) du document dont l'adresse sur le réseau (1) est indiquée par la nouvelle adresse lue dans la base de données (3);
○ mettre à jour l'indicateur de mise à jour dans la base de données (3), pour indiquer que le document dont l'adresse figure dans le champ adresse est affiché (45) sur l'écran du premier ordinateur (21).

2. Procédé selon la revendication 1,
**caractérisé en ce que** le réseau de transmission (1) utilisé est un réseau basé sur le protocole TCP/IP.

3. Procédé selon la revendication 1 ou 2,
**caractérisé en ce qu'**il comprend une étape consistant à afficher sur un écran (33) du second ordinateur (31) le document affiché sur le premier ordinateur (21).

4. Procédé selon l'une des revendications 1 à 3,
**caractérisé en ce que** le fichier balisé est de type HTML.

5. Procédé selon l'une des revendications 1 à 4,
**caractérisé en ce que** plusieurs ordinateurs exécutent simultanément la procédure exécutée par le premier ordinateur (21), de manière à ce qu'un unique second ordinateur (31) commande à distance les écrans d'affichage (23) respectifs des dits plusieurs ordinateurs.

6. Procédé selon l'une des revendications 1 à 5,
**caractérisé en ce qu'**il est bidirectionnel, le premier ordinateur (21) commandant également l'affichage d'un document dans une fenêtre prévue à cet effet sur l'écran d'affichage du second ordinateur (31).

7. Procédé selon l'une quelconque des revendications précédentes, dans lequel la première procédure (40) et la deuxième procédure (50) sont écrites dans le langage Java script ou PHP.

## Patentansprüche

1. Verfahren zur Fernsteuerung des Anzeigebildschirms (23) eines ersten Computers (21) durch einen zweiten Computer (31), wobei diese zwei Computer durch ein Übertragungsnetz (1) für digitale Daten miteinander verbunden sind, das dem ersten (21) und dem zweiten (31) Computer ermöglicht, auf eine Datenbank (3) zuzugreifen, die ein Adressfeld, das die Adresse eines anzuzeigenden Dokuments enthält, und ein Aktualisierungsanzeigefeld umfasst, dessen Wert angibt, ob das Dokument, dessen Adresse in dem Adressfeld aufgeführt ist, von dem ersten Computer (21) angezeigt wurde,
wobei das Verfahren die Schritte umfasst, die in Folgendem bestehen:
• Öffnen einer markierten Datei, die eine erste Routine (40) in der Form eines Skripts enthält, auf dem ersten Computer (21) mithilfe einer Navigationssoftware vom Internet-Typ;
• Ausführen der besagten ersten Routine (40) durch den ersten Computer (21), wobei die Ausführung der ersten Routine (40) Schritte umfasst, die in Folgendem bestehen:
○ Ausführen einer Anforderung zum Zugreifen auf das Adressfeld, das in der Datenbank enthalten ist; und
○ Anzeigen des besagten Dokuments, das durch seine Adresse gefunden wurde, in einem Fenster des Anzeigebildschirms des ersten Computers (21);
• paralleles Öffnen einer markierten Datei, die eine zweite Routine (50) in der Form eines Skripts enthält, auf dem zweiten Computer (31) mithilfe einer Navigationssoftware vom Internet-Typ,
• Ausführen der besagten zweiten Routine (50) durch den zweiten Computer (31), wobei die Ausführung der ersten Routine (50) Schritte umfasst, die in Folgendem bestehen:
○ Ausführen einer Anforderung zum Zugreifen auf das Adressfeld, das in der Datenbank enthalten ist;
○ Anzeigen des besagten Dokuments, das durch seine Adresse gefunden wurde, in einem ersten Fenster des Anzeigebildschirms des zweiten Computers (31);
○ Anzeigen einer Liste von Links zu Dokumenten, die angezeigt werden können und die der Bediener des zweiten Computers (31) auswählen kann, in einem zweiten Fenster des Anzeigebildschirms des zweiten Computers (31);
• Auswählen und Aktivieren eines der Links der Liste durch den Bediener des zweiten Computers (31),
• Ausführung der zweiten Routine (50) durch die Nachschlagesoftware des zweiten Computers (31), wobei die Ausführung Schritte umfasst, die in Folgendem bestehen:
○ Feststellen, ob der Bediener des zweiten Computers (31) einen der Links zu Dokumenten ausgewählt und aktiviert hat (52); und wenn dies der Fall ist,
○ Aktualisieren des Adressfelds in der Datenbank (3) mit der Adresse des Dokuments, das dem aktivierten Link entspricht (53),
○ Aktualisieren des Aktualisierungsanzeigefelds,
○ Steuern der Anzeige des so ausgewählten Dokuments in einem für diesen Zweck reservierten Teil des Bildschirms (33) des zweiten Computers (31),
• Ausführung der ersten Routine (40), wobei die Ausführung außerdem Schritte umfasst, die in Folgendem bestehen:
○ periodisches Vornehmen von Anforderungen zum Lesen der Datenbank (3), um den Wert der Aktualisierungsanzeige zu überwachen (42), und wenn dieser Wert angibt, dass ein neues Dokument angezeigt werden muss,
○ Lesen (43) der neuen Adresse, die in dem Adressfeld aufgeführt ist,
○ Steuern der Anzeige (44) des Dokuments, dessen Adresse in dem Netz (1) durch die neue Adresse angegeben wird, die in der Datenbank (3) gelesen wurde;
○ Aktualisieren der Aktualisierungsanzeige in der Datenbank (3), um anzugeben, dass das Dokument, dessen Adresse in dem Adressfeld angegeben ist, auf dem Bildschirm des ersten Computers (21) angezeigt wird (45).

2. Verfahren nach Anspruch 1,
**dadurch gekennzeichnet, dass** das verwendete Übertragungsnetz (1) ein Netz ist, das auf dem TCP/IP-Protokoll basiert.

3. Verfahren nach Anspruch 1 oder 2,
**dadurch gekennzeichnet, dass** es einen Schritt umfasst, der im Anzeigen des Dokuments, das auf dem ersten Computer (21) angezeigt wird, auf einem Bildschirm (33) des zweiten Computers (31) besteht.

4. Verfahren nach einem der Ansprüche 1 bis 3,
**dadurch gekennzeichnet, dass** die markierte Datei vom HTML-Typ ist.

5. Verfahren nach einem der Ansprüche 1 bis 4,
**dadurch gekennzeichnet, dass** mehrere Computer gleichzeitig die Routine ausführen, die von dem ersten Computer (21) ausgeführt wird, so dass ein einziger zweiter Computer (31) die jeweiligen Anzeigebildschirme (23) der genannten mehreren Computer fernsteuert.

6. Verfahren nach einem der Ansprüche 1 bis 5,
**dadurch gekennzeichnet, dass** es bidirektional ist, wobei der erste Computer (21) ebenfalls die Anzeige eines Dokuments in einem zu diesem Zweck vorgesehenen Fenster auf dem Anzeigebildschirm des zweiten Computers (31) steuert.

7. Verfahren nach einem der vorhergehenden Ansprüche, wobei die erste Routine (40) und die zweite Routine (50) in der Sprache JavaScript oder PHP geschrieben sind.

## Claims

1. A method for the remote control of the display screen (23) of a first computer (21), by a second computer (31), these two computers being interconnected via a digital data transmission network (1) giving the first (21) and second (31) computers access to a database (3) comprising an address field containing the address of a document to be displayed and an update indicator field the value of which indicates whether the document whose address is shown in the address field has been displayed by the first computer (21).
the method consists of the steps:
• opening a tagged file containing a first procedure (40) in the form of a script on the first computer (21) using an Internet-type Web browser;
• executing said first procedure (40) by the first computer (21), the execution of the first procedure (40) consisting of the steps:
○ executing a request for access to the address field contained in the database; and
○ displaying said document identified by its address in a window of the display screen of the first computer (21);
• opening at the same time a tagged file containing a second procedure (50) in the form of a script on the second computer (31) using an Internet-type Web browser,
• executing said second procedure (50) by the second computer (31), the execution of the second procedure (50) consisting of the steps:
○ executing a request for access to said address field contained in the database;
○ displaying said document identified by its address in a first window of the display screen of the second computer (31);
○ displaying in a second window of the display screen of the second computer (31) a list of links to documents which can be displayed and which the operator of the second computer (31) can select;
• selecting and activating one of the links on the list by the operator of the second computer (31),
• executing the second procedure (50) by the consultation software of the second computer (31) consisting of the steps:
○ detecting whether the operator of the second computer (31) has selected and activated one of the links to documents (52) and, if that is the case,
○ updating in the database (3) the address field with the address of the document corresponding to the activated link (53),
○ updating the update indicator field,
○ controlling the display of the document thus selected in a section dedicated for this purpose of the screen (33) of the second computer (31);
• executing the first procedure (40) further consisting of:
○ performing periodic requests for database reading (3) to monitor the value of the update indicator (42), and check whether this value indicates that a new document must be displayed,
○ reading (43) the new address shown in the address field,
○ controlling the display (44) of the document whose address on the network (1) is indicated by the new address read in the database (3);
○ updating the update indicator in the database (3) to indicate that the document whose address is shown in the address field is displayed (45) on the display screen of the first computer (21).

2. A method according to claim 1,
**characterized in that** the transmission network (1) used is a TCP/IP protocol-based network.

3. A method according to claim 1 or 2, **characterized in that** it comprises a step of displaying on a screen (33) of the second computer (31) the document displayed on the first computer (21).

4. A method according to one of claims 1 to 3, **characterized in that** the tagged file is an HTML-type file.

5. A method according to one of claims 1 to 4, **characterized in that** several computers simultaneously execute the procedure executed by the first computer (21) so that a single second computer (31) remote controls the respective display screens (23) of said several computers.

6. A method according to one of claims 1 to 5, **characterized in that** it is bidirectional, the first computer (21) also controlling the display of a document in a window provided for this purpose on the display screen of the second computer (31).

7. A method according to any one of the preceding claims, wherein the first procedure (40) and the second procedure (50) are written in the Java script or PHP language.
